# FASCICULE DE BREVET EUROPEEN

(11) **EP 2 481 118 B1**
(45) Date de publication et mention de la délivrance du brevet: **10.07.2013**
(21) Numéro de dépôt: 10773116.8
(22) Date de dépôt: 24.09.2010
(51) Int. Cl.: H01M 8/04, H01M 8/10

(54) **PROCÉDÉ D'ALIMENTATION À PARTIR D'UNE PILE À COMBUSTIBLE TENANT COMPTE DE LA POLLUTION PAR L'OXYDE DE SOUFRE ET DISPOSITIF D'ALIMENTATION**
VERFAHREN ZUR STROMVERSORGUNG AUS EINER BRENNSTOFFZELLE UNTER BERÜCKSICHTIGUNG DER SCHWEFELOXIDVERSCHMUTZUNG SOWIE STROMVERSORGUNGSVORRICHTUNG
METHOD FOR SUPPLYING POWER FROM A FUEL CELL TAKING SULFUR OXIDE POLLUTION INTO ACCOUNT, AND POWER SUPPLY DEVICE

(30) Priorité: 25.09.2009 FR 0904592
(43) Date de publication de la demande: 01.08.2012
(73) Titulaire: Commissariat à l'Énergie Atomique et aux Énergies Alternatives, 75015 Paris (FR)
(72) Inventeur: LEMAIRE, Olivier, F-38490 Les Abrets (FR); BARDI, Nicolas, F-38380 Miribel-Les-Echelles (FR); BARTHE, Benoît, F-73310 Chindrieux (FR); FRANCO, Alejandro, F-38320 Eybens (FR)
(74) Mandataire: Talbot, Alexandre
(86) Numéro de dépôt international: PCT/FR2010/000639
(87) Numéro de publication internationale: WO 2011/036356

(56) Documents cités:
- EP-A1- 1 699 103
- GOULD B D ET AL: "Deactivation of Pt/VC proton exchange membrane fuel cell cathodes by SO2, H2S and COS", JOURNAL OF POWER SOURCES, ELSEVIER SA, CH LNKD- DOI:10.1016/J.JPOWSOUR.2008.11.072, vol. 188, no. 1, 1 mars 2009 (2009-03-01), pages 89-95, XP026001844, ISSN: 0378-7753 [extrait le 2008-11-27]

## Description

### Domaine technique de l'invention

L'invention concerne un procédé d'alimentation en énergie à partir d'une pile à combustible comportant un gaz comburant.

L'invention concerne également un dispositif d'alimentation en énergie comprenant une pile à combustible et des moyens de contrôle de la température de fonctionnement de la pile, la pile comportant un gaz comburant.

### État de la technique

Les piles à combustible sont des systèmes électrochimiques qui permettent de convertir une énergie chimique en électricité. Pour les piles à combustible à membrane échangeuse de protons (« Proton Exchange Membrane Fuel Cell », PEMFC), l'énergie chimique se présente sous la forme d'hydrogène gazeux. La pile à combustible se décompose en deux compartiments séparés par une membrane échangeuse de protons. L'un des compartiments est alimenté en hydrogène, appelé gaz combustible, et l'autre est alimenté en oxygène ou en air, appelé gaz comburant. A l'anode, la réaction d'oxydation de l'hydrogène produit des protons et des électrons. Les protons traversent la membrane tandis que les électrons doivent passer dans un circuit électrique externe pour atteindre la cathode. A la cathode se produit la réaction de réduction de l'oxygène, en présence des protons et des électrons.

Le coeur de la pile, appelé également assemblage membrane-électrodes (AME), est constitué de couches catalytiques et de la membrane séparatrice. Les couches catalytiques sont le siège des réactions d'oxydation et de réduction dans la pile. Des couches de diffusion gazeuse sont disposées de part et d'autre de l'AME pour assurer la conduction électrique, l'arrivée homogène des gaz et l'évacuation de l'eau produite par la réaction et des gaz non consommés.

La pollution des gaz comburant et combustible est l'un des principaux facteurs responsables de la dégradation des performances d'une pile PEMFC. Les impuretés contenues dans l'hydrogène (gaz combustible) sont, par exemple, les oxydes de carbone CO et CO₂, les composés soufrés (H₂S en particulier) et l'ammoniac NH₃. Ces impuretés proviennent notamment du procédé de fabrication de l'hydrogène. Les polluants de l'air ou de l'oxygène (gaz comburant) sont, par exemple, les oxydes d'azote NO_{X}, les oxydes de soufre SO_{X} et les oxydes de carbone CO_{X}. Ces polluants proviennent généralement des échappements des véhicules automobiles, des sites industriels et militaires.

Ces contaminants peuvent pénétrer les zones de réaction chimique de la pile et se fixer sur les sites catalytiques de l'anode et de la cathode. Les sites catalytiques sont alors bloqués et ne participent plus aux processus d'oxydation et de réduction. Par ailleurs, les contaminants modifient la structure et les propriétés du coeur de la pile, par exemple en modifiant son caractère hydrophobe ou hydrophile.

Ainsi, la dégradation des performances de la pile est principalement due à la diminution de l'activité catalytique, aux pertes ohmiques suite à l'augmentation de la résistance des composants de la pile et aux pertes de transport de masse suite aux variations de la structure. Parmi les polluants du gaz comburant énoncés ci-dessus, les oxydes de soufre (SO_{X}), le dioxyde de soufre SO₂ notamment, sont particulièrement nocifs et dégradent fortement les performances de la pile.

Différentes méthodes électrochimiques sont employées pour régénérer les performances d'une pile à combustible après un épisode de pollution aux composés soufrés. Ces méthodes consistent à appliquer un courant électrique ou une impulsion électrique à chacune des électrodes contaminées, afin d'enlever les impuretés à leur surface. Une autre méthode consiste à imposer une tension qui varie de manière cyclique entre -1,5V et 1,5V. Ces techniques de régénération permettent de retrouver un niveau de performances satisfaisant. Cependant, de telles techniques nécessitent une mise hors service de la pile. Bien qu'il puisse être bref, l'arrêt de la pile est néfaste pour le dispositif qu'elle alimente. Il est donc préférable de minimiser le nombre de ces interventions en limitant la dégradation de la pile pendant la pollution.

L'article « A review of PEM hydrogen fuel cell contamination : Impacts, mechanisms, and mitigation » (Cheng et al., Journal of Power Sources, 165, 739-756, 2007) suggère qu'une augmentation de la température est bénéfique pour le fonctionnement d'une pile à combustible. D'une part, l'augmentation de température permet de limiter l'impact des polluants du gaz combustible, par l'oxyde de carbone CO notamment. D'autre part, les vitesses des réactions d'oxydation de l'hydrogène et de réduction de l'oxygène sont augmentées et la gestion hydraulique est facilitée.

Le document EP 1 699 103 A1 présente un procédé et un appareil permettant de purifier l'air destiné à une pile à combustible.

En revanche, aucune des solutions proposées ne permet de limiter la dégradation des performances pendant une phase de pollution du gaz comburant par les oxydes de soufre.

### Objet de l'invention

L'invention vise un procédé d'alimentation en énergie par une pile à combustible à membrane échangeuse de protons, simple et facile à mettre en oeuvre, permettant de préserver les performances de la pile même pendant une pollution.

Plus particulièrement, l'invention a pour but un procédé d'alimentation permettant de diminuer la vitesse de dégradation des performances lors d'une pollution aux oxydes de soufre.

Selon l'invention, ce but est atteint par le fait que le procédé comporte successivement les étapes suivantes : la détection d'oxyde de soufre dans le gaz comburant, et la diminution de la température de fonctionnement de la pile lorsque la quantité en oxyde de soufre détectée est supérieure à un seuil prédéterminé.

L'invention a également pour but un dispositif d'alimentation en énergie.

Ce but est atteint par le fait que le dispositif d'alimentation en énergie, comporte un dispositif de détection d'oxyde de soufre dans le gaz comburant et en ce que les moyens de contrôle comportent des moyens pour réduire la température lorsque la quantité d'oxyde de soufre détectée est supérieure à un seuil prédéterminé

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente un dispositif d'alimentation en énergie selon l'invention.
- la figure 2 représente les variations de performances d'une pile dans le temps, en fonction de la température.
- la figure 3 représente, de manière schématique, les variations de la température et des performances d'une pile dans le temps, dans un procédé d'alimentation selon l'invention.
- la figure 4 représente, de manière schématique, les variations de la température et des performances d'une pile dans le temps, dans une variante du procédé d'alimentation selon l'invention.

### Description de modes particuliers de réalisation

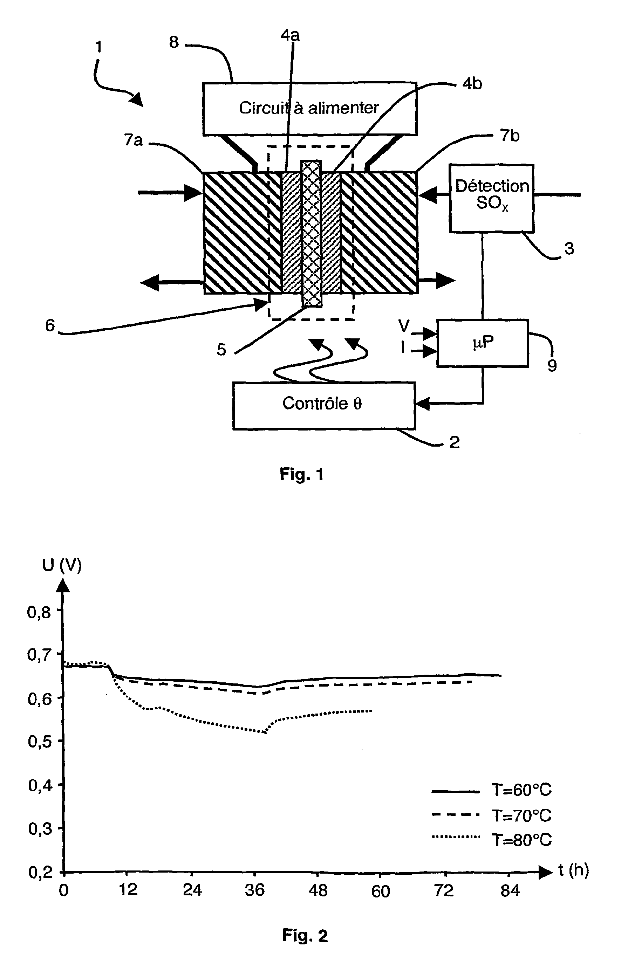

La figure 1 représente un dispositif d'alimentation en énergie. Le dispositif comporte une pile à combustible 1 à échangeuse de protons (PEMFC), des moyens 2 de contrôle de la température de fonctionnement de la pile et un dispositif de détection 3 d'oxyde de soufre dans le gaz comburant. La pile PEMFC comporte des électrodes anodique et cathodique, respectivement 4a et 4b, et une membrane séparatrice 5 en polymère placée entre les électrodes 4a et 4b. L'assemblage membrane-électrodes (AME) 6 constitue le coeur de pile. Les électrodes sont disposées sur des couches de diffusion gazeuse 7a et 7b, reliées à un circuit électrique 8 à alimenter. Chaque couche de diffusion gazeuse (7a, 7b) comprend une entrée de gaz et une sortie pour le gaz en excès et les produits de réaction. Les entrées-sorties sont représentées par les flèches horizontales, respectivement à gauche pour le gaz combustible et à droite pour le gaz comburant sur la figure 1.

Dans le mode particulier de réalisation représenté à la figure 1, le dispositif comporte avantageusement un circuit électronique de commande 9, par exemple un microprocesseur, permettant de déterminer la vitesse de dégradation des performances de la pile, notamment à partir des valeurs de tension (V) et courant (I) mesurées. Le circuit de commande 9 est également connecté à la sortie du dispositif de détection 3 pour commander les moyens 2 de contrôle de la température.

Pour limiter la dégradation de la pile pendant une phase de pollution par un oxyde de soufre SO_{X}, la température de fonctionnement de la pile est diminuée lorsque la quantité en oxyde de soufre détectée est supérieure à un seuil prédéterminé. Cette diminution de la température de fonctionnement permet de ralentir la chute des performances de la pile. Lorsque le dispositif de détection 3 indique la présence d'oxyde de soufre dans le gaz comburant, le dioxyde de soufre SO₂ par exemple, les moyens 2 de contrôle réduisent la température de la pile. Les moyens 2 de contrôle de la température comprennent, par exemple, des tapis chauffants, un système de ventilation et un fluide caloporteur. Alors, le refroidissement peut être réalisé par arrêt de l'alimentation électrique des tapis chauffants associé à une ventilation régulière de la pile ou par abaissement rapide de la température du fluide caloporteur. Une diminution de température est, par exemple, de l'ordre de 10°C à 20°C.

La figure 2 illustre un exemple de fonctionnement de la pile représentée à la figure 1. Les conditions de fonctionnement de cette pile sont les suivantes :
- Le chargement des électrodes en catalyseur, le platine par exemple, est de l'ordre de 0,5mg/cm².
- La membrane polymère est, de préférence, en Nafion® (DuPont™) et d'une épaisseur de l'ordre de 50µm.
- Le taux d'humidité des gaz réactifs à l'anode et à la cathode est de 60% environ.
- La densité de courant de la pile est de l'ordre de 0,6A/cm².

Les courbes de la figure 2 représentent, en fonction du temps, la tension U aux bornes de cette pile pour différentes températures (60°C, 70°C et 80°C). La tension U diminue entre 10h et 40h, correspondant à une phase de pollution, et augmente après 40h de fonctionnement, correspondant à une phase sans polluant. La concentration en gaz polluant SO₂ dans l'air est de l'ordre de 1,5ppm (parties par million).

A une température de fonctionnement de 80°C (courbe en pointillés fins), la tension U chute rapidement de 0,68V à 0,54V alors qu'à 70°C, (courbe en pointillés épais) la tension ne chute que de 0,68V à 0,63V. La diminution de la tension est encore plus réduite à une température de 60°C, comme représenté par la courbe en trait plein.

La tension aux bornes de la pile peut être un des paramètres physiques représentatifs de la dégradation des performances pendant une phase de pollution. Alors, la vitesse de dégradation des performances correspond à la vitesse de diminution de la tension. Sur la figure 2, cette vitesse vaut, en moyenne, 5,17mV/h à une température de fonctionnement de 80°C, 2mV/h à 70°C et 1,5mV/h à 60°C. Ainsi, la vitesse de dégradation des performances est au moins divisée par deux si la température est abaissée de 80°C à 70°C. La vitesse est davantage diminuée si la température est réduite à 60°C.

Le procédé d'alimentation en énergie comporte donc successivement une étape de détection d'oxyde de soufre dans le gaz comburant (par le dispositif de détection 3) et une étape de diminution de la température de fonctionnement de la pile (par les moyens 2 de contrôle de la température) lorsque la quantité d'oxyde de soufre détectée est supérieure à un seuil prédéterminé. Pendant l'étape de détection, le détecteur de gaz peut mesurer la quantité de gaz polluant dans un certain volume de gaz comburant et déterminer ainsi la concentration en polluant, par exemple 1 ppm. Cette concentration peut être utilisée comme critère pour le contrôle de la température de la pile.

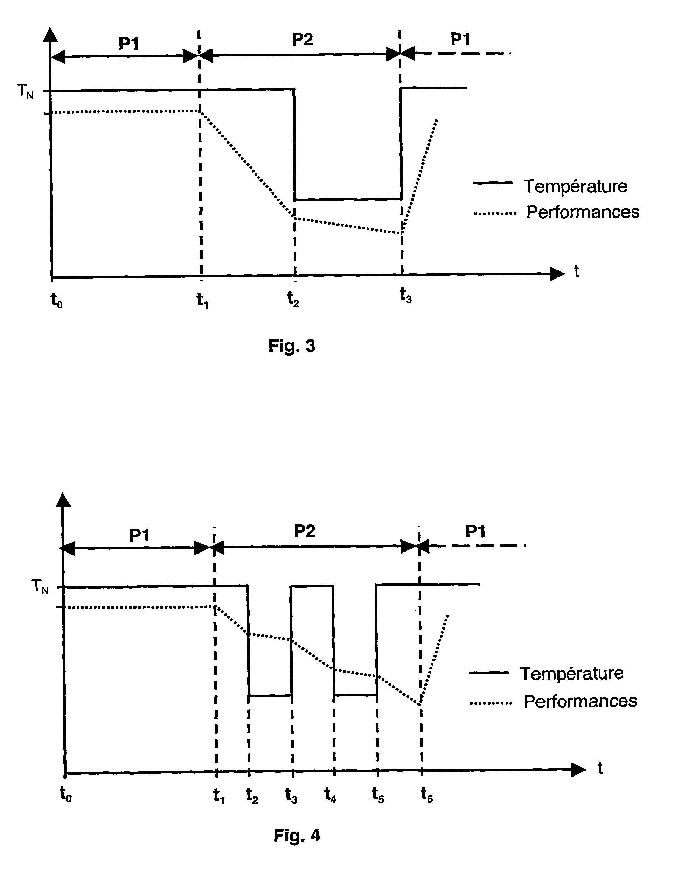

La figure 3 représente, de manière schématique, l'évolution des performances et de la température dans le temps, pendant des phases P1 sans polluant et une phase P2 de pollution. Entre les instants t₀ et t₁, la pile est dans une phase de fonctionnement sans polluant (phase P1). La température est à une valeur nominale maximale T_{N} et les performances sont maximales et constantes. Entre les instants t₁ et t₃ (phase P2), un oxyde de soufre est présent dans le gaz comburant. Jusqu'à l'instant t₂, la température est maintenue à sa valeur initiale et les performances diminuent rapidement. En effet, la vitesse de diminution des performances, correspondant à la pente de la courbe associée, est élevée. Le dispositif de détection 3 détecte la présence d'oxyde de soufre et commande une diminution de température aux moyens 2 de contrôle. La température diminue, par exemple, de 10°C, à partir de l'instant t₂. Les performances continuent de diminuer, mais à une allure largement réduite. La pente diminue ce qui signifie que la vitesse de dégradation des performances est réduite. A l'instant t₃, la pile fonctionne de nouveau sans polluant, la température est augmentée à sa valeur nominale T_{N} et les performances de la pile reviennent vers leur niveau initial.

Ce procédé d'alimentation diffère des techniques de régénération citées précédemment pour retrouver les performances initiales d'une pile après une pollution. En effet, il s'agit, pendant une phase de pollution, de ralentir la dégradation de la pile pour, à l'issue de la phase de pollution, retrouver des performances proches des performances avant pollution. On remarque sur la figure 2 que le fonctionnement à une température réduite permet un meilleur retour aux performances initiales.

Dans une variante de réalisation représentée à la figure 4, la diminution de température pendant une phase de pollution P2 peut être réalisée sous la forme de cycles. Ainsi, la vitesse de diminution (pente de la courbe des performances) est diminuée de manière transitoire, pendant certains intervalles de temps. Par exemple, la température est abaissée entre les instants t₂ et t₃, puis entre t₄ et t₅ et remontée entre les instants t₃ et t₄, puis t₅ et t₆. Cette variante permet également un bon retour aux performances après pollution. De plus, cette variante présente l'avantage de prévoir les retours à la température normale et de détecter si la vitesse de diminution des performances a toujours la même valeur.

Le procédé comporte avantageusement une étape de calcul de la vitesse de dégradation des performances de la pile. Le circuit de commande 9 détermine, par exemple, la chute de la tension aux bornes de la pile pendant la phase de pollution. Si la vitesse de dégradation est élevée, signe d'une concentration en polluant importante, la température de fonctionnement peut être diminuée davantage afin de diminuer cette vitesse. La diminution de la température de fonctionnement est alors fonction, non seulement de la présence du polluant, mais également de la vitesse de dégradation des performances. Plus cette vitesse est importante, plus la diminution de la température est grande. La diminution de température est, de préférence, comprise entre 10°C et 20°C. Avantageusement, cette diminution sera comprise entre 5% et 70% de la valeur de la température nominale de fonctionnement.

Le procédé d'alimentation lors d'une pollution du gaz comburant s'applique même si le gaz combustible est lui aussi pollué, par NH₃ ou CO par exemple. Comme décrit précédemment, une augmentation de la température est avantageuse dans le cas d'une pollution du gaz combustible. Donc une diminution de la température réduit les performances de la pile vis-à-vis de la pollution du gaz combustible et de la cinétique des réactions. En revanche, la diminution de température ralentit la dégradation de la pile due à l'oxyde de soufre dans le gaz comburant. Le bénéfice de ce ralentissement dans la dégradation est néanmoins supérieur à la perte de performances due à la diminution de température. En effet, les oxydes de soufre sont très nocifs pour le fonctionnement de la pile. Il sera donc toujours avantageux de diminuer la température lors d'une pollution par ces oxydes.

## Revendications

1. Procédé d'alimentation en énergie à partir d'une pile à combustible à membrane échangeuse de protons comportant un gaz comburant, **caractérisé en ce qu'**il comporte successivement les étapes suivantes :
- la détection d'oxyde de soufre dans le gaz comburant, et
- la diminution de la température de fonctionnement de la pile lorsque la quantité en oxyde de soufre détectée est supérieure à un seuil prédéterminé.

2. Procédé selon la revendication 1, **caractérisé en ce qu'**il comporte en outre une étape de calcul de la vitesse de dégradation des performances de la plie.

3. Procédé selon la revendication 2, **caractérisé en ce que** la diminution de la température de fonctionnement est fonction de la vitesse de dégradation des performances.

4. Procédé selon l'une quelconque des revendications 1 à 3, **caractérisé en ce que** la diminution de la température de fonctionnement est réalisée sous la forme de cycles.

5. Procédé selon l'une quelconque des revendications 1 à 4, **caractérisé en ce que** l'oxyde de soufre est du dioxyde de soufre.

6. Procédé selon l'une quelconque des revendications 1 à 5, **caractérisé en ce que** la diminution de la température est comprise entre 5% et 70% de la température nominale de fonctionnement.

7. Dispositif d'alimentation en énergie comprenant une pile à combustible à membrane échangeuse de protons (1) et des moyens (2) de contrôle de la température de fonctionnement de la pile, ladite pile (1) comportant un gaz comburant, **caractérisé en ce qu'**il comporte un dispositif (3) de détection d'oxyde de soufre dans le gaz comburant et **en ce que** les moyens (2) de contrôle comportent des moyens pour réduire la température lorsque la quantité d'oxyde de soufre détectée est supérieure à un seuil prédéterminé.

## Patentansprüche

1. Verfahren zur Stromversorgung aus einer Brennstoffzelle mit Protonenaustauschmembran, die ein die Verbrennung förderndes Gas aufweist, **dadurch gekennzeichnet, dass** es nacheinander die folgenden Schritte aufweist:
- die Erkennung von Schwefeloxid in dem die Verbrennung fördernden Gas, und
- die Verringerung der Betriebstemperatur der Brennstoffzelle, wenn die festgestellte Menge an Schwefeloxid größer ist als ein vorgegebener Schwellenwert.

2. Verfahren nach Anspruch 1, **dadurch gekennzeichnet, dass** es darüberhinaus einen Schritt der Berechnung der Geschwindigkeit der Verschlechterung der Leistungsfähigkeit der Brennstoffzelle aufweist.

3. Verfahren nach Anspruch 2, **dadurch gekennzeichnet, dass** die Veringerung der Betriebstemperatur von der Geschwindigkeit der Verschlechterung der Leistungsfähigkeit abhängt.

4. Verfahren nach einem der Ansprüche 1 bis 3, **dadurch gekennzeichnet, dass** die Verringerung der Betriebstemperatur in Form von Zyklen erfolgt.

5. Verfahren nach einem der Ansprüche 1 bis 4, **dadurch gekennzeichnet, dass** es sich bei dem Schwefeloxid um Schwefeldioxid handelt.

6. Verfahren nach einem der Ansprüche 1 bis 5, **dadurch gekennzeichnet, dass** die Verringerung der Temperatur zwischen 5% und 70% der nominalen Betriebstemperatur liegt.

7. Stromversorgungsvorrichtung, die eine Brennstoffzelle mit Protonenaustauschmembran (1) und Elemente (2) zur Kontrolle der Betriebstemperatur der Brennstoffzelle aufweist, wobei die Brennstoffzelle (1) ein die Verbrennung förderndes Gas aufweist, **dadurch gekennzeichnet, dass** sie eine Vorrichtung (3) zur Erkennung von Schwefeloxid in dem die Verbrennung fördernden Gas aufweist, und dass die Kontrollelemente (2) Elemente zur Reduzierung der Temperatur aufweisen, wenn die festgestellte Menge an Schwefeloxid größer ist als ein vorgegebener Schwellenwert.

## Claims

1. Method for supplying power from a proton exchange membrane fuel cell comprising an oxidising gas, **characterized in that** it successively comprises the following steps:
- detecting sulphur oxide in the oxidising gas, and
- decreasing the operating temperature of the cell when the quantity of sulphur oxide detected is greater than a predetermined threshold.

2. Method according to claim 1, **characterized in that** it further comprises a step of calculating the degradation rate of the performances of the cell.

3. Method according to claim 2, **characterized in that** the decrease in the operating temperature is a function of the degradation rate of the performances.

4. Method according to any one of claims 1 to 3, **characterized in that** the decrease in the operating temperature is performed in the form of cycles.

5. Method according to any one of claims 1 to 4, **characterized in that** the sulphur oxide is sulphur dioxide.

6. Method according to any one of claims 1 to 5, **characterized in that** the temperature decrease is comprised between 5% and 70% of the nominal operating temperature.

7. Power supply device comprising a proton exchange membrane fuel cell (1) and means for controlling (2) the operating temperature of the cell, said cell (t) comprising a oxidising gas, **characterized in that** it comprises a device (3) for detecting sulphur oxide in the oxidising gas and **in that** the means for controlling (2) comprise means for decreasing the temperature when the quantity of sulphur oxide detected is grater than a predetermined threshold.
